# EUROPEAN PATENT APPLICATION

(11) **EP 4 733 241 A2**
(43) Date of publication of application: **29.04.2026**
(21) Application number: 25209486.7
(22) Date of filing: 17.10.2025
(51) Int. Cl.: B66B 7/06, D07B 1/22

(54) **ELEVATOR BELT WITH STEEL CORD**

(30) Priority: 23.10.2024 US 202418924542
(71) Applicant: Otis Elevator Company, Farmington, Connecticut 06032 (US)
(72) Inventor: Serkh, Alexander, Farmington, 06032 (US); Guilani, Bardia, Farmington, 06032 (US)
(74) Representative: Schmitt-Nilson Schraud Waibel Wohlfrom Patentanwälte Partnerschaft mbB

(57) **Abstract**

A belt of an elevator system includes one or more tension elements extending longitudinally along a length of the belt, and a flexible jacket at least partially enveloping the one or more tension elements. The jacket defines a traction side configured to be interactive with a traction sheave of the elevator system and a back side opposite the traction side. A tension element of the one or more tension elements is formed from a plurality of steel wires coated with a coating layer. The coating layer comprises less than 50% Zinc.

## Description

Exemplary embodiments pertain to the art of elevator systems and in particular to tension members of elevator systems, such as belts or ropes.

Typical tension members of elevator systems and in particular, belts, include cords formed from steel wires coated with Zinc. The cords are then enveloped in a jacket material to retain the cords and to provide an interface of the belt to the sheaves and other components of the elevator system. Zinc-coated wires have relatively high cost, and the use of alternative coatings would be welcomed in the art. Such alternative coatings, however, do not have the same adhesion performance to the jacket material as Zinc. As such, improvement in the adhesion or mechanical interlock of the cords to the jacket material would be needed to utilize such alternative coating materials for the steel wires.

In one exemplary embodiment, a belt of an elevator system includes one or more tension elements extending longitudinally along a length of the belt, and a flexible jacket at least partially enveloping the one or more tension elements. The jacket defines a traction side configured to be interactive with a traction sheave of the elevator system and a back side opposite the traction side. A tension element of the one or more tension elements is formed from a plurality of steel wires coated with a coating layer. The coating layer comprises less than 50% Zinc.

Particular embodiments further may include at least one, or a plurality of, the following optional features, alone or in combination with each other:

Additionally or alternatively, in this or other embodiments the coating layer includes a brass material.

Additionally or alternatively, in this or other embodiments penetration of the jacket material into spaces between the plurality of steel wires is greater than 50%.

Additionally or alternatively, in this or other embodiments penetration of the jacket material into spaces between the plurality of steel wires is in the range of 50-80%.

Additionally or alternatively, in this or other embodiments penetration of the jacket material into spaces between the plurality of steel wires is greater than 80%.

Additionally or alternatively, in this or other embodiments the jacket is formed from one of a thermoplastic or elastomeric material.

Additionally or alternatively, in this or other embodiments the plurality of wires are formed into a plurality of strands.

In another exemplary embodiment, a belt of an elevator system includes one or more tension elements extending longitudinally along a length of the belt, and a flexible jacket at least partially enveloping the one or more tension elements. The jacket defines a traction side configured to be interactive with a traction sheave of the elevator system and a back side opposite the traction side. A tension element of the one or more tension elements is formed from a plurality of steel wires coated with a coating layer. Penetration of the jacket material into spaces between the plurality of steel wires is greater than 50%.

Additionally or alternatively, in this or other embodiments the coating layer comprises less than 50% Zinc.

Additionally or alternatively, in this or other embodiments the coating layer includes a brass material.

Additionally or alternatively, in this or other embodiments penetration of the jacket material into spaces between the plurality of steel wires is in the range of 50-80%.

Additionally or alternatively, in this or other embodiments penetration of the jacket material into spaces between the plurality of steel wires is greater than 80%.

Additionally or alternatively, in this or other embodiments the jacket is formed from one of a thermoplastic or elastomeric material.

Additionally or alternatively, in this or other embodiments the plurality of wires are formed into a plurality of strands.

In another exemplary embodiment, an elevator system includes a hoistway, an elevator car movable along the hoistway, and a belt operably connected to the elevator car to move the elevator car along the hoistway. The belt includes one or more tension elements extending longitudinally along a length of the belt, and a flexible jacket at least partially enveloping the one or more tension elements. The jacket defines a traction side configured to be interactive with a traction sheave of the elevator system and a back side opposite the traction side. A tension element of the one or more tension elements is formed from a plurality of steel wires coated with a coating layer, and the coating layer comprises less than 50% Zinc.

Particular embodiments further may include at least one, or a plurality of, the following optional features, alone or in combination with each other:

Additionally or alternatively, in this or other embodiments the coating layer includes a brass material.

Additionally or alternatively, in this or other embodiments penetration of the jacket material into spaces between the plurality of steel wires is greater than 50%.

Additionally or alternatively, in this or other embodiments penetration of the jacket material into spaces between the plurality of steel wires is in the range of 50-80%.

Additionally or alternatively, in this or other embodiments penetration of the jacket material into spaces between the plurality of steel wires is greater than 80%.

Additionally or alternatively, in this or other embodiments the plurality of wires are formed into a plurality of strands.

The following descriptions should not be considered limiting in any way. With reference to the accompanying drawings, like elements are numbered alike:
FIG. 1 is a schematic illustration of an embodiment of an elevator system;
FIG. 2 is a schematic illustration of an embodiment of a belt of an elevator system;
FIG. 3 is a schematic illustration of an embodiment of a tension element of a belt of an elevator system;
FIG. 4 is a schematic illustration of another embodiment of a tension element of a belt of an elevator system;
FIG. 5 is a schematic illustration of yet another embodiment of a tension element of a belt of an elevator system; and
FIG. 6 is a schematic illustration of still another embodiment of a tension element of a belt of an elevator system.

A detailed description of one or more embodiments of the disclosed apparatus and method are presented herein by way of exemplification and not limitation with reference to the Figures.

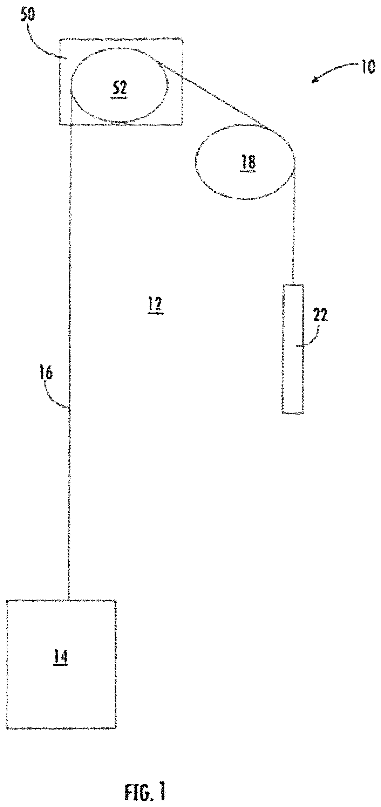

Shown in FIG. 1 is a schematic view of an exemplary traction elevator system 10. Features of the elevator system 10 that are not required for an understanding of the present invention (such as the guide rails, safeties, *etc.*) are not discussed herein. The elevator system 10 includes an elevator car 14 operatively suspended and/or propelled in a hoistway 12 with one or more tension members, for example belts 16. While in the following description, belts 16 are the tension members utilized in the elevator system, one skilled in the art will readily appreciate that the present disclosure may be utilized with other tension members, such as ropes or braided tapes. The one or more belts 16 interact with sheaves 18 and 52 to be routed around various components of the elevator system 10. Sheave 18 is configured as a diverter, deflector or idler sheave and sheave 52 is configured as a traction sheave, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10. The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other.

In some embodiments, the elevator system 10 could use two or more belts 16 for suspending and/or driving the elevator car 14. In addition, the elevator system 10 could have various configurations such that either both sides of the one or more belts 16 engage the sheaves 18, 52 or only one side of the one or more belts 16 engages the sheaves 18, 52. The embodiment of FIG 1 shows a 1:1 roping arrangement in which the one or more belts 16 terminate at the elevator car 14 and counterweight 22, while other embodiments may utilize other roping arrangements.

The belts 16 are constructed to meet belt life requirements and have smooth operation, while being sufficiently strong to be capable of meeting strength requirements for suspending and/or driving the elevator car 14 and counterweight 22.

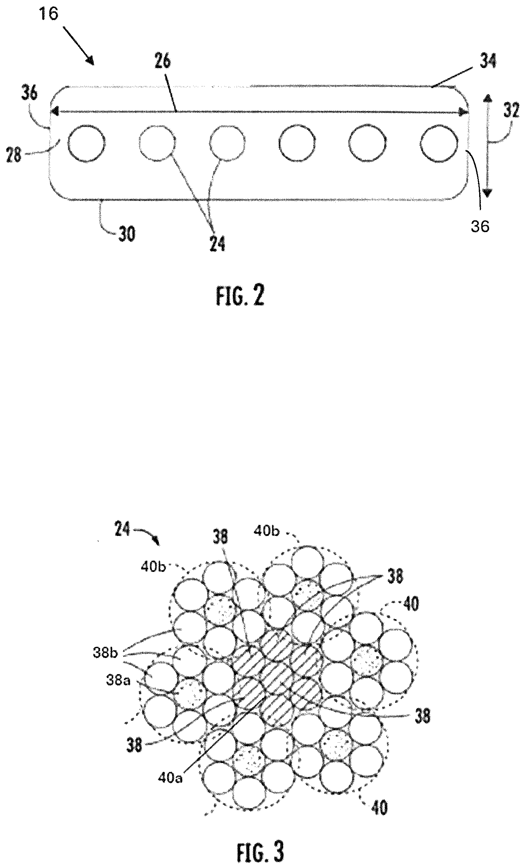

FIG. 2 provides a cross-sectional schematic of an exemplary belt 16 construction or design. The belt 16 includes a plurality of tension elements 24 extending longitudinally along the belt 16 and arranged across a belt width 26. The tension elements 24 are at least partially enclosed in a jacket 28 to restrain movement of the tension elements 24 in the belt 16 with respect to each other and to protect the tension elements 24. The jacket 28 defines a traction side 30 configured to interact with a corresponding surface of the traction sheave 52. A primary function of the jacket 28 is to provide a sufficient coefficient of friction between the belt 16 and the traction sheave 52 to produce a desired amount of traction there between. The jacket 28 should also transmit the traction loads to the tension elements 24. In addition, the jacket 28 should be wear-resistant, fatigue-resistant, and protect the tension elements 24 from impact damage, exposure to environmental factors, such as chemicals, for example.

Exemplary materials for the jacket 28 include the elastomers of thermoplastic and thermosetting polyurethanes, thermoplastic polyester elastomers, ethylene propylene diene elastomer, chloroprene, chlorosulfonyl polyethylene, ethylene vinyl acetate, polyamide, polypropylene, butyl rubber, acrylonitrile butadiene rubber, styrene butadiene rubber, acrylic elastomer, fluoroelastomer, silicone elastomer, polyolefin elastomer, styrene block and diene elastomer, natural rubber, or combinations thereof. Other materials may be used to form the jacket material 28 if they are adequate to meet the required functions of the belt 16.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34. While six tension elements 24 are illustrated in the embodiment of FIG. 2, other embodiments may include other numbers of tension elements 24, for example, 4, 10 or 12 tension elements 24. Further, while the tension elements 24 of the embodiment of FIG. 2 are substantially identical, in other embodiments, the tension elements 24 may differ from one another. While a belt 16 with a rectangular cross-section is illustrated in FIG. 2, it is to be appreciated that belts 16 having other cross-sectional shapes are contemplated within the scope of the present disclosure.

Referring now to FIG. 3, the tension element 24, also referred to as a cord, may be a plurality of wires 38, for example, steel wires 38, which in some embodiments are formed into one or more strands 40. The strands 40 are groups of wires 38 that are arranged, in some embodiments, by twisting or the like. An exemplary strand 40 may include a central wire 38a and a plurality of outer wires 38b arranged around the central wire 38a. In some embodiments the wires 38a and 38b are the same size and formed of the same material, while in other embodiments the wires 38a and 38b may vary in cross-sectional shape or size and/or vary in material composition. For example, the central wire 38a may be formed from a first material and has a first cross-sectional shape, and the outer wires 38b may be formed from a second material different from the first material, and/or the outer wires 38b may have a second cross-sectional shape different from the first cross-sectional shape.

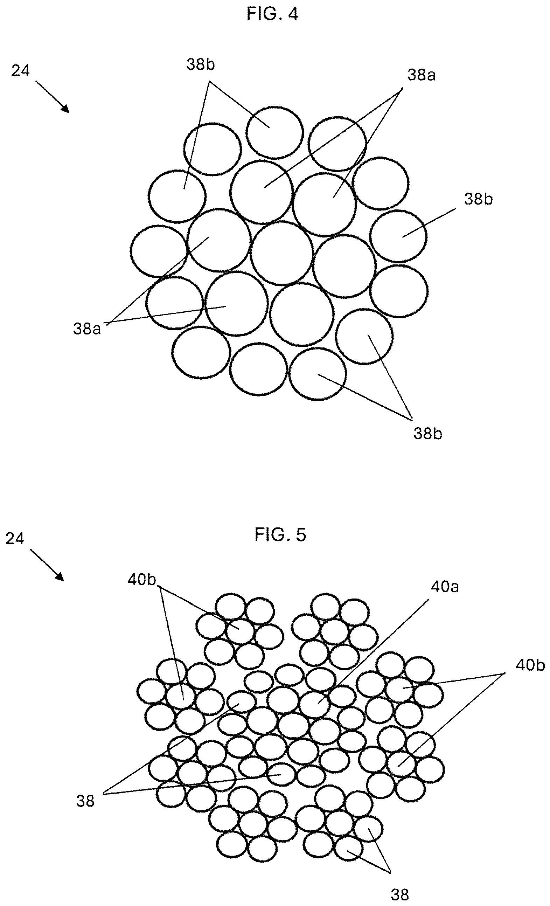

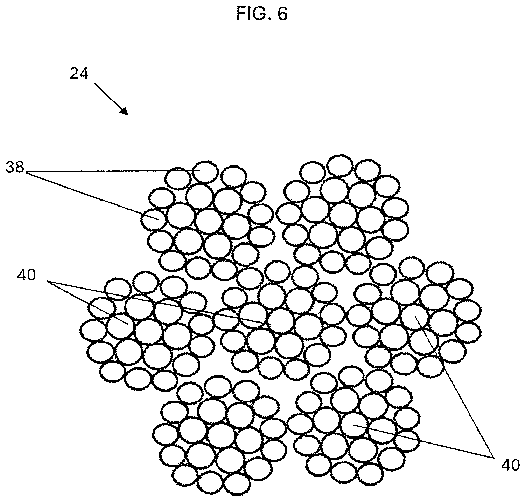

The strands 40 are grouped or arranged to form a tension element 24. In some embodiments, the tension element 24 includes one or more central strands 40a with a plurality of outer strands 40b arranged around the central strands 40a. In some embodiments, the outer strands 40b are wrapped around the central strands 40a. While in some embodiments, the central strands 40a have the same configuration as each of the outer strands 40b, in other embodiments, the outer strands 40b and the central strands 40a may vary in, for example, wire 38 quantity, wire 38 cross-sectional size or shape, or wire 38 material composition. The arrangement of wires 38 is FIG. 3 is merely exemplary. Other exemplary embodiments of tension element 24 are illustrated in FIGS. 4-6. As illustrated in FIG. 4, one embodiment of a tension element 24 may include a grouping of 19 wires 38, with 7 central wires 38a surrounded by 12 outer wires 38b. In another embodiment illustrated in FIG. 5, the tension element 24 may include a central strand 40a formed from, for example, 19 wires 38. Seven outer strands 40b, each having seven wires 38, surround the central strand 40a. Another exemplary embodiment of the tension element 24 is illustrated in FIG. 6, having seven strands 40 of nineteen wires 38 each.

While a circular cross-sectional tension element geometry is illustrated in the embodiment of FIG 3, other embodiments may include different tension element cross-sectional geometries, such as rectangular or ellipsoidal. While the cross-sectional geometries of the tension elements 24 in FIG. 2 are shown as identical, in other embodiments the tension elements' cross-sectional geometries may differ from one another. The steel wires 38 include a coating, which is applied to each of the steel wires 38 by, for example, a plating process. The coating provides a protection to the steel wires 38 from damage, oxidation, corrosion, or the like. The coating is formed from a material that utilizes less than 50% Zinc. In some embodiments, the coating is a brass material.

Referring again to FIG.3, the steel wires 38 are arranged such that penetration of the jacket 28 material into empty space between the steel wires 38 of the tension elements 24 is greater than 50%, and in some embodiments is 80% or more. The empty space is defined as space between wires of strands 38, space between strands 38 of the tension elements 24 and space between tension elements 24 of the belt 16. This penetration of the jacket 28 material into the empty space at such a degree improves the mechanical connection between the tension elements 24 and the jacket 28. As such, the use of primer and/or adhesive to secure the tension elements 24 to the jacket 28 may be reduced or eliminated. Additionally, utilizing a wire coating in which Zinc is not the primary component reduces the cost of the belt 16.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A belt of an elevator system, comprising:
one or more tension elements extending longitudinally along a length of the belt;
a flexible jacket at least partially enveloping the one or more tension elements, the jacket defining a traction side configured to be interactive with a traction sheave of the elevator system and a back side opposite the traction side;
wherein a tension element of the one or more tension elements is formed from a plurality of steel wires coated with a coating layer;
wherein the coating layer comprises less than 50% Zinc.

2. The belt of claim 1, wherein the coating layer includes a brass material.

3. The belt of claim 1 or 2, wherein penetration of the jacket material into spaces between the plurality of steel wires is greater than 50%.

4. The belt of claim 3, wherein penetration of the jacket material into spaces between the plurality of steel wires is in the range of 50-80%.

5. The belt of claim 3, wherein penetration of the jacket material into spaces between the plurality of steel wires is greater than 80%.

6. The belt of any of claims 1 to 5, wherein the jacket is formed from one of a thermoplastic or elastomeric material.

7. The belt of any of claims 1 to 6, wherein the plurality of wires are formed into a plurality of strands.

8. A belt of an elevator system, comprising:
one or more tension elements extending longitudinally along a length of the belt;
a flexible jacket at least partially enveloping the one or more tension elements, the jacket defining a traction side configured to be interactive with a traction sheave of the elevator system and a back side opposite the traction side;
wherein a tension element of the one or more tension elements is formed from a plurality of steel wires coated with a coating layer;
wherein penetration of the jacket material into spaces between the plurality of steel wires is greater than 50%.

9. The belt of claim 8, wherein the coating layer comprises less than 50% Zinc.

10. The belt of claim 8 or 9, wherein the coating layer includes a brass material.

11. The belt of any of claims 8 to 10, wherein penetration of the jacket material into spaces between the plurality of steel wires is in the range of 50-80%.

12. The belt of any of claims 8 to 10, wherein penetration of the jacket material into spaces between the plurality of steel wires is greater than 80%.

13. The belt of any of claims 8 to 12, wherein the jacket is formed from one of a thermoplastic or elastomeric material.

14. The belt of any of claims 8 to 13, wherein the plurality of wires are formed into a plurality of strands.

15. An elevator system, comprising:
a hoistway;
an elevator car movable along the hoistway;
a belt according to any of claims 1 to 14, the belt operably connected to the elevator car to move the elevator car along the hoistway.
